# EUROPEAN PATENT APPLICATION

(11) **EP 2 148 181 A2**
(43) Date of publication of application: **27.01.2010**
(21) Application number: 09157757.7
(22) Date of filing: 09.04.2009
(51) Int. Cl.: G01L 9/08

(54) **A pressure sensor operating in a fluid medium**

(30) Priority: 20.07.2008 US 176378
(71) Applicant: Veterix Ltd., 30600 Or Aquiva (IL)
(72) Inventor: Tahar, Eliav, TEL AVIV 68109 (IL)
(74) Representative: Sarpi, Maurizio

(57) **Abstract**

A pressure sensor and a method of measuring pressure signals in a fluid medium. The pressure sensor comprises a sensing element for transducing pressure signals to electric signals and a mechanical amplifier connected to the sensing element, comprising an immersed appendage and a transmission element. The sensing element is enclosed within a case, and the mechanical amplifier is structured to seal the case and isolate the sensing element from the fluid medium. Pressure signals in the fluid medium cause movements in the appendage that are transmitted via the elongated transmission element to the sensing element that is isolated from the fluid medium. The method comprises the stages: Sensing the pressure signal and transmitting it via a transmission element to a piezoelectric sensing element inside the measuring apparatus.

## Description

### FIELD OF THE INVENTION

The present invention generally relates to the field of sensing. More particularly, the present invention relates to a pressure sensor.

### BACKGROUND OF THE INVENTION

WO2005112615, which is incorporated herein by reference in its entirety, discloses a bolus configured to process an overall acoustic signal emanated from different signal sources within the animal, and output values indicative of respective physiological parameters of the animal indicative of its health condition, such as heartbeat rate, respiration rate, rumination activity, etc.

US61/044,517 which is incorporated herein by reference in its entirety, discloses a system and method for monitoring animal health utilizing capsules traveling the digestive tract from mouth to rectum. US 61/044,514 which is incorporated herein by reference in its entirety, discloses a system and method for monitoring physiological conditions using continuous telemetric measurement of physiological parameters.

### SUMMARY OF THE INVENTION

The present invention discloses a pressure sensor operating in a fluid medium. The sensor comprises a sensing element for transducing a pressure signal to an electric signal and a mechanical amplifier operatively connected to the sensing element. The sensing element is enclosed within a case, and the mechanical amplifier is structured to seal the case and isolate the sensing element from the fluid medium. The mechanical amplifier comprises an appendage connected externally to the sealed case and immersed in the fluid medium, and an elongated transmission element operatively connecting the appendage to the sensing element in such a way that the pressure signal is transmitted from the appendage to the sensing element. Pressure signals in the fluid medium cause movements in the appendage that are transmitted via the elongated transmission element to the sensing element that is isolated from the fluid medium.

In embodiments, the sensing elements comprises an upper plate connected to the elongated transmission element and a piezoelectric plate connected to the upper plate, wherein the upper plate with the elongated transmission element are arranged to amplify the pressure signal to allow an optimal deformation of the piezoelectric plate.

In embodiments, the appendage is an integral part of the case and comprises an inner notch. The distal end of the elongated transmission element is arranged to fit in this inner notch, such that movements of the appendage are transmitted to the elongated transmission element.

The present invention further discloses a pressure sensor operating in a fluid medium. The sensor comprises a sensing element for transducing a pressure signal to an electric signal, that is enclosed within a sealed case as well as an elongated transmission element operatively connected to the sensing element and to the inner side of the sealed case, in such a way that the pressure signal is transmitted from the surface of the sealed case to the sensing element. The pressure signals in the fluid medium cause movements in the surface of the sealed case that are transmitted via the elongated transmission element to the sensing element. In embodiments, the front edge of the sealed case has a thin and flexible side walls and a thicker central wall.

The present invention further discloses a method of measuring pressure signals in a fluid medium. The method comprises the stages: (i) sensing a pressure signal in a fluid medium by a sealed case of a measuring apparatus, (ii) transmitting the pressure signal from the fluid medium to a transmission element inside the measuring apparatus, (iii) transmitting the pressure signal from the transmission element to a piezoelectric sensing element, and (iv) transducing the pressure signal into an electric signal by the piezoelectric sensing element.

In embodiments, the method further comprises connecting at least one appendage to the sealed case, wherein the appendage improves the sensing of a pressure signal; and transmitting the pressure signal from the fluid medium into a measuring apparatus while maintaining the measuring apparatus sealed against the fluid medium.

### BRIEF DESCRIPTION OF THE DRAWINGS

The subject matter regarded as the invention will become more clearly understood in light of the ensuing description of embodiments herein, given by way of example and for purposes of illustrative discussion of the present invention only, with reference to the accompanying drawings (Figures, or simply "FIGS."), wherein:
Figs. 1A, 1B, 1C are block diagrams illustrating apparatuses for monitoring the physiological condition of animals located within the animals digestive tract. Figs. 1A illustrates an apparatus according to prior art, while Figs. 1B and 1C illustrate apparatuses according to some embodiments of the invention.
Fig. 2 is an illustration of a configuration of a sensing element, in side view and in top view, according to some embodiments of the invention.
Fig. 3 is an illustration of an elongated transmission element connected to a sensing element, in perspective and in side view, according to some embodiments of the invention.
Fig. 3A is an illustration of a sensing element, in side view, according to some embodiments of the invention.
Fig. 4 is a cross section of a pressure sensor operating in a fluid medium, according to some embodiments of the invention.
Fig. 5 is a cross section of a pressure sensor operating in a fluid medium, according to some embodiments of the invention.
Fig. 6 is a cross section of a pressure sensor operating in a fluid medium, according to some embodiments of the invention.
Fig. 7 is a cross section of a pressure sensor operating in a fluid medium, according to some embodiments of the invention.
Fig. 8 is a cross section of a pressure sensor operating in a fluid medium, according to some embodiments of the invention.
Fig. 9 is a flowchart illustrating a method for measuring pressure signals in a fluid medium, according to some embodiments of the invention.

### DETAILED DESCRIPTIONS OF SOME EMBODIMENTS OF THE INVENTION

The present invention discloses a pressure sensor operating in a fluid medium and a method for measuring pressure signals in a fluid medium. The disclosure comprises different embodiments of a sensing element and of a mechanical amplifier, arranged to transmit the pressure signal from the external fluid medium to a sensing element inside of sealed case.

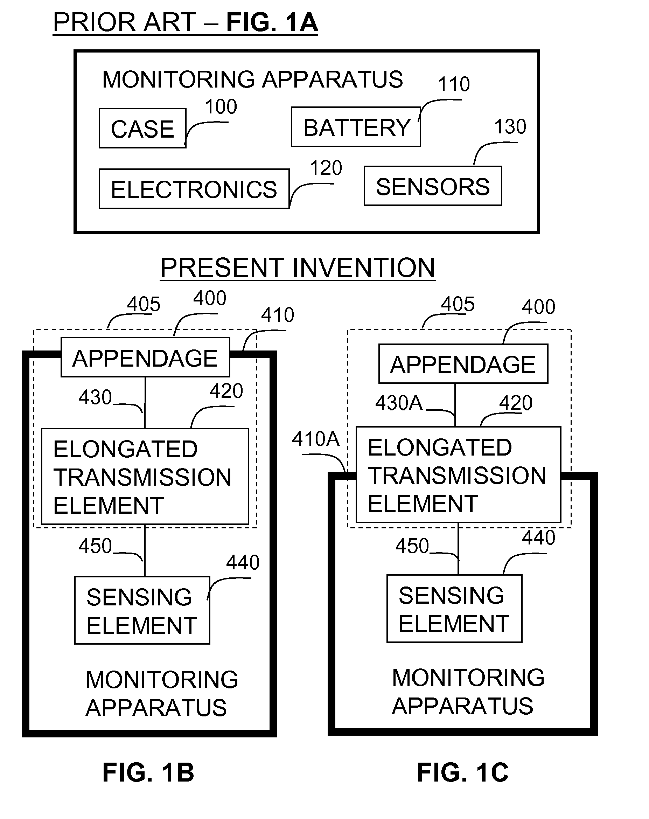

Figs. 1A, 1B, 1C are block diagrams illustrating apparatuses for monitoring the physiological condition of animals located within the animals digestive tract. Figs. 1A illustrates an apparatus according to prior art, while Figs. 1B and 1C illustrate apparatuses according to some embodiments of the invention. The apparatus according to prior art comprises a case **100** holding a battery **110** and electronic elements **120,** as well as different sensors **130.** The apparatus according to some embodiments of the invention comprises a pressure sensor operating in a fluid medium. The sensor comprises a sensing element **440** and a mechanical amplifier **405** comprising an appendage **400** and an elongated transmission element **420.** The appendage **400** is connected to the elongated transmission element **420** by connecting means **430** and the elongated transmission element **420** is connected to the sensing element **440** by connecting means **450.** The mechanical amplifier **405** is connected to the case **410** of the monitoring apparatus either (i) via the appendage **400** (Fig. 1B), i.e. the appendage **400** is connected to the case **410** directly or is an integral part of the case **410** (e.g. cast together with the case **410**), while the connecting means **430** is internal to the case **410,** or (ii) via the elongated transmission element **420** (Fig. 1C) i.e. the elongated transmission element **420** is connected to the case **410A** and the connecting means **430** is external to the case **410A.** In the latter case the appendage **400** is not part of the case **410A.** The appendage **400** is immersed in said fluid medium and transmits pressure signals via connecting means **430** to the elongated transmission element **420.** Together they build the mechanical amplifier **405** which is operatively connected to the sensing element **440** and structured to seal the case **410** and isolate the sensing element **440** from the fluid medium, as well as adjust the intensity of pressure signal reaching the sensing element **440.** The connecting means **450** allows the pressure signal to be transmitted to the sensing element **440** without damaging it, and the sensing element **440** transduces the pressure signal to an electric signal. Altogether - pressure signals in the fluid medium cause movements in the appendage **400** that are transmitted via the elongated transmission element **420** to the sensing element **440** that is kept isolated from the fluid medium.

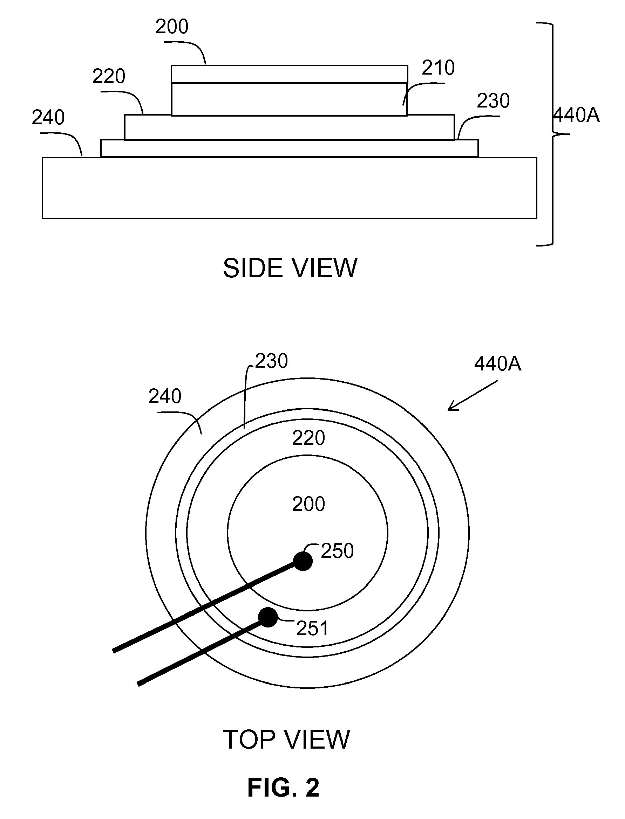

Fig. 2 is an illustration of a configuration of a sensing element **440A,** in side view and in top view, according to some embodiments of the invention. The sensing element **440A** comprises a piezoelectric ceramic chip **210** with a metal coating **200,** attached upon a thin metal plate **220** (e.g. made of brass). A first electric contact **250** is connected to the metal coating **200** of piezoelectric ceramic chip **210,** and a second electric contact **251** is connected to the thin metal plate **220.** These plates **200, 210, 220** are attached upon a ceramic isolation plate **230** (e.g. over 30 MΩ), that is attached upon a base metal plate **240** (e.g. made of brass). The base metal plate **240** supports the other plates. According to some embodiments of the invention, all plates are between 0.1 mm and 0.3 mm thick, and between 20 mm and 40 mm in diameter. The sensing element **440A** is an embodiment of the sensing element **440.**

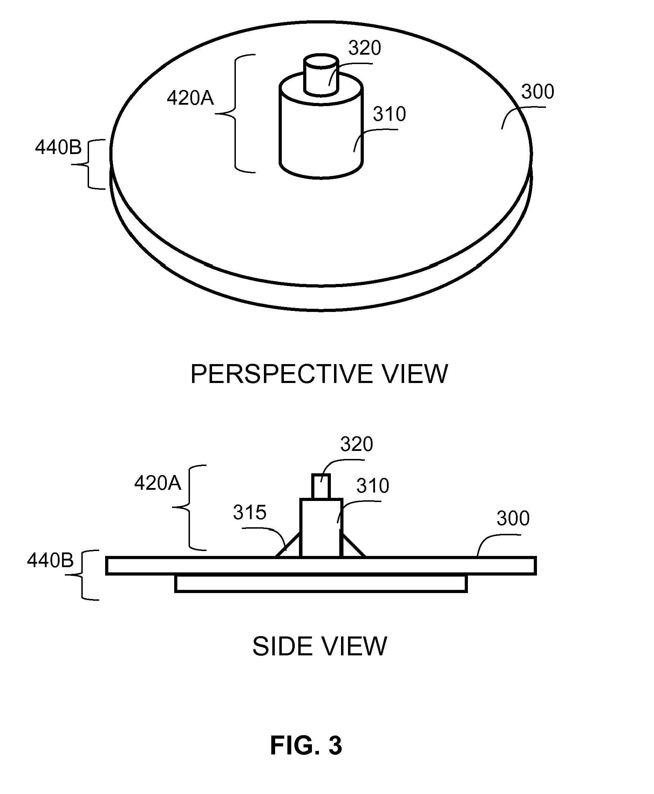

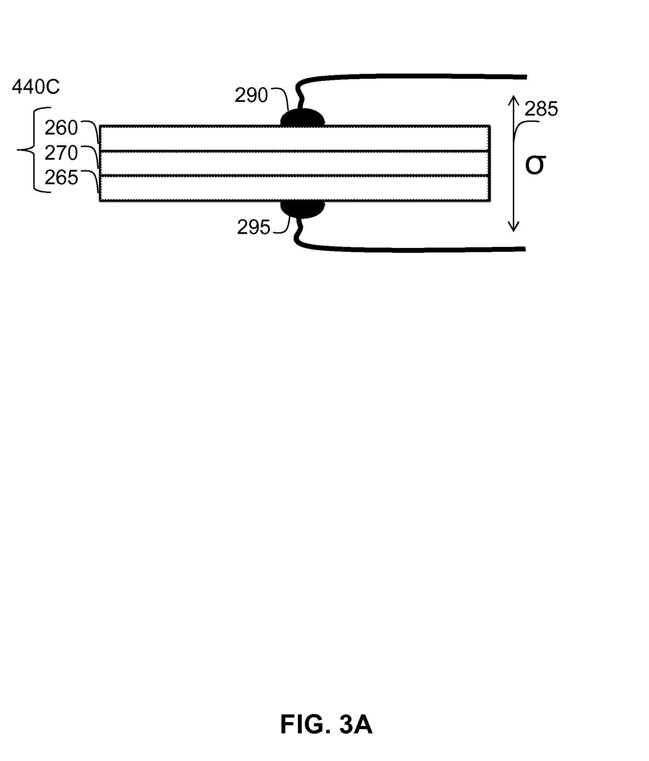

Fig. 3 is an illustration of an elongated transmission element **420A** connected to a sensing element **440B,** in perspective and in side view, according to some embodiments of the invention. The sensing element **440B** is an embodiment of the sensing element **440.** The elongated transmission element **420A** is an embodiment of the elongated transmission element **420,** and may comprise a main subunit **310** and a secondary subunit **320** which enables connecting the elongated transmission element **420A** to the appendage **400** (as part of an embodiment of the connecting means **430).** The main subunit **310,** which may be a pin, is connected to the middle of the sensing element **440B,** which may be a plate. The connection may be e.g. by soldering, leaving some solder **315** as support. The soldering is an embodiment of the connecting means **450.**

The sensing element **440B** may comprise an upper plate **300** and a lower ceramic, piezoelectric plate **305** connected to the upper plate **300.** The sensing element **440B** may comprise additional layers. The structure of the sensing element **440B** is such that it allows an optimal deformation of a piezoelectric element - i.e. large enough to be measured and permit good resolution of the measurement data, yet small enough to avoid damage to the piezoelectric element. In addition, the structure of the sensing element **440B** must allow connection to the elongated transmission element **420A** and of electric contacts without damage to the piezoelectric element. The elongated transmission element **420A** transmits a pressure signal received in its distal end **320** to the proximal sensing element **300.** Utilizing the lever of the elongated transmission element **420A,** the pressure signal may be amplified at the sensing element **440B.** The distal end **320** of the elongated transmission element **420A** may receive the pressure signal from the case of the apparatus, or from an appendage connected externally to the case.

According to some embodiments of the invention the elongated transmission element **420** may comprise several transmission elements interconnected by joints, which transmit the pressure signal to the sensing element **440** in a range of intensities allowing an optimal analysis of the electric signal to which the pressure signal is transduced.

Fig. 3A is an illustration of a sensing element **440C,** in side view, according to some embodiments of the invention. The sensing element **440C** comprises an upper plate **260** that may be connected to the elongated transmission element **420A** and a piezoelectric plate **270** connected to the upper plate **260.** The upper plate **260** is arrange to amplify the pressure signal coming from the elongated transmission element **420** and to allow an optimal deformation of the piezoelectric plate **270,** according to its specifications. The sensing element **440C** is an embodiment of the sensing element **440.**

The sensing element **440C** may further comprise a lower metal plate **265** connected to the piezoelectric plate **270** such that at least a portion of the piezoelectric plate **270** is enclosed between the upper plate **260** and the lower metal plate **265,** an upper connection **290** to the upper plate **260** and a lower connection **295** to the lower metal plate **265.** The conductivity **285** of the piezoelectric plate **270** may be measured between the connections **290** and **295** and be utilized to indicate the mechanical stress applied to the piezoelectric plate **270.** Changes in the mechanical stress represent changes in the pressure signal in the fluid medium outside the case.

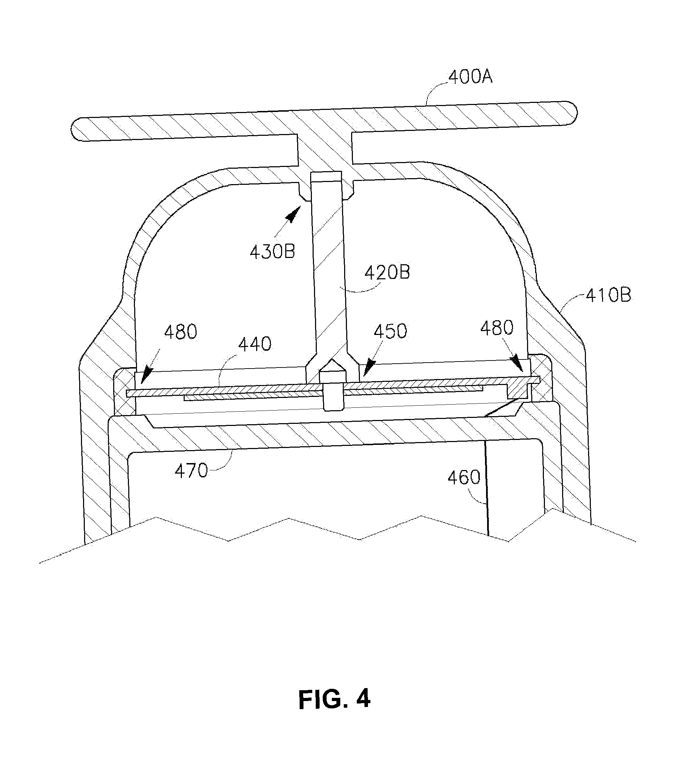

Fig. 4 is a cross section of a pressure sensor operating in a fluid medium, according to some embodiments of the invention. The pressure sensor comprises a sensing element **440** enclosed within a sealed case **410B,** and a mechanical amplifier comprising an appendage **400A** connected externally to the sealed case **410B** and immersed in the fluid medium as well as an elongated transmission element **420B** that operatively connects the appendage **400A** to the sensing element **440.** The appendage **400A** may be shaped as a plate. The elongated transmission element **420B** is connected to the sensing element **440** by a connection area **450,** e.g. by soldering. The connection area **450** may be arranged to allow connecting the elongated transmission element **420B** to the sensing element **440** without damaging it, and in a way allowing the transmission of a pressure signal to the sensing element **440.** The sensing element **440** is arranged to allow an optimal deformation of a piezoelectric element - i.e. large enough to be measured and permit good resolution of the measurement data, yet small enough to avoid damage to the piezoelectric element. The sensing element **440** may comprise two to five layers - a piezoelectric layer, a metal layer connected to the elongated transmission element **420B** and other layers for support and insulation.

According to some embodiments of the invention, pressure signals in the fluid medium move the appendage **400A,** which in turn moves the elongated transmission element **420.** The elongated transmission element **420B** transmits the pressure signal to the sensing element **440,** which transduces the pressure signal to an electric signal. The mechanical amplifier thus transfers the mechanical signal from the external medium to the sensing element **440** that is enclosed within the sealed case **410B,** and its structure is arranged to deliver typical pressure signals to the sensing element **440** in an optimal intensity, allowing an efficient detection of the pressure signal. The electric signal is transmitted by wires **460** to the electronic circuits enclosed in an inner case **470.** The sensing element **440** is attached to the case **410B** by to flexible connectors **480,** attaching it firmly yet flexible to the inner wall of the case **410B,** allowing some movement caused be the mechanical stressed applied to it by the elongated transmission element **420B.**

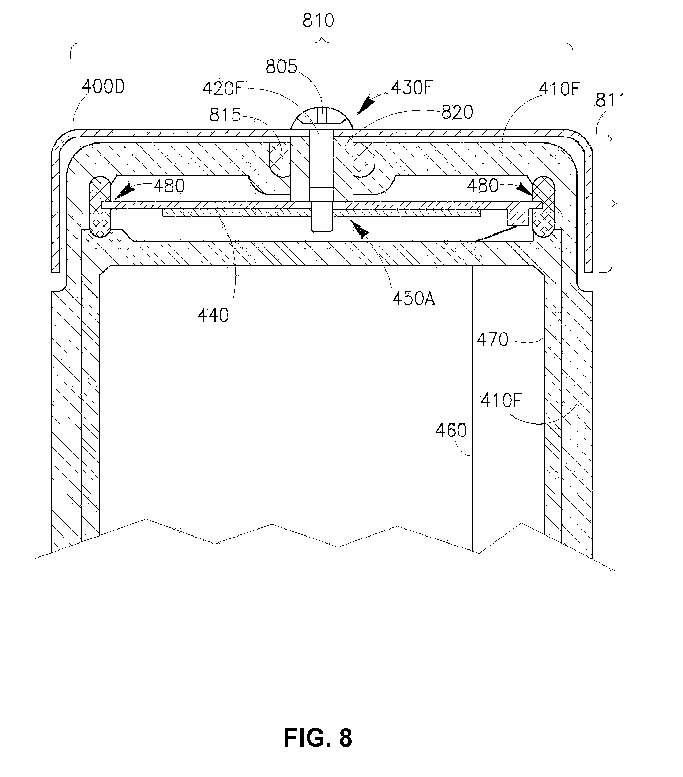

According to some embodiments of the invention, the mechanical amplifier receives and transmits a pressure signal from outside the case **410B** to the sensing element **440** within the case. The interface **430B** of the appendage **400A** and the elongated transmission element **420B** is thus both sealed and permits an efficient transmission of the mechanical signal. According to some embodiments, the appendage **400A** is connected upon the case **410B** and the interface **430B** is sealed utilizing e.g. O rings (see Fig. 8). According to other embodiments, the appendage **400A** is an integral part of case **410B** (e.g. cast together with the case **410B)** and comprises an inner notch at its base. The distal end of the elongated transmission element **420** may be arranged to fit into the inner notch, in a way that movements of the appendage **400** are transmitted to the elongated transmission element **420.**

Assembling the apparatus, the elongated transmission element **420B** is inserted into the notch from within the case **410B.** These embodiments allow a better sealing of the case which endures rougher environment. The mechanical amplifier is structured to seal the case **410B** and isolate the sensing element **440** and the electronics from the fluid medium. The good sealing in crucial for the sensor to operate in the digestive tract which is characterized by strong movements (digestive contractions) and low pH.

The appendage **400A** is an embodiment of the appendage **400,** the case **410B** is an embodiment of the case **410.** the elongated transmission element **420B** is an embodiment of the elongated transmission element **420.** The interface **430B** arises from an embodiment of the connecting means **430.**

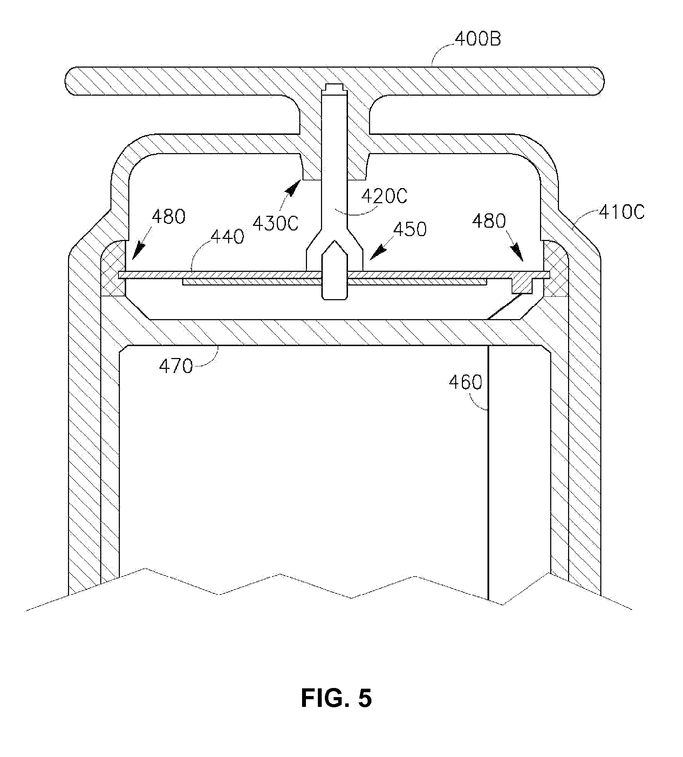

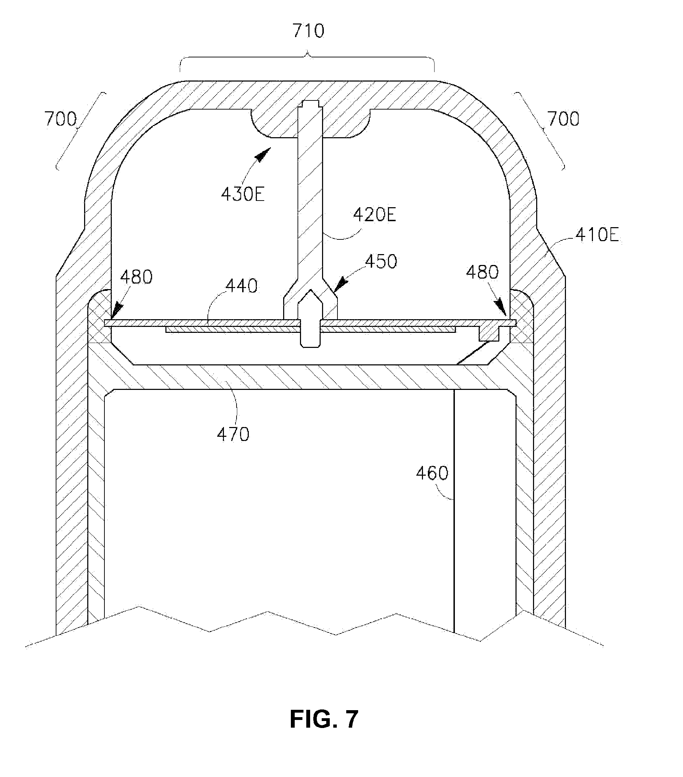

Fig. 5 is a cross section of a pressure sensor operating in a fluid medium, according to some embodiments of the invention. Fig. 5 illustrates an embodiment of the pressure sensor which is similar to the embodiment illustrated in Fig. 4, except for the connection area of the elongated transmission element **420C.** In Fig. 5, the interface **430C** of the appendage **400B** and the elongated transmission element **420C** is larger and allows a stronger pressure signal transmission from the appendage **400** to the elongated transmission element **420C.** In addition, the flatter form of the front edge of the case **410C** increases the proportion of signal coming from the appendage **400B** in respect to the proportion of signal coming from the case **410C** (compare to Fig. 7 below). The appendage **400B** may be shaped as a plate.

According to other embodiments, the appendage **400B** is an integral part of case **410C** (e.g. cast together with the case **410C)** and comprises an inner notch at its base. The distal end of the elongated transmission element **420** may be arranged to fit into the inner notch, in a way that movements of the appendage **400** are transmitted to the elongated transmission element **420.** The inner notch and the fitting elongated transmission element **420C** are represented in the interface **430C** in Fig. 5.

The appendage **400B** is an embodiment of the appendage **400,** the case **410C** is an embodiment of the case **410.** the elongated transmission element **420C** is an embodiment of the elongated transmission element **420.** The interface **430C** arises from an embodiment of the connecting means **430.**

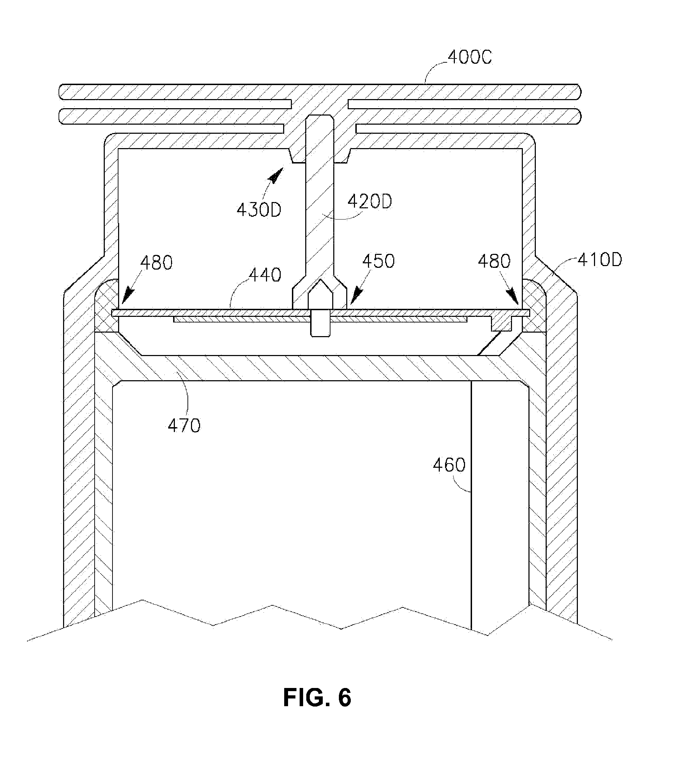

Fig. 6 is a cross section of a pressure sensor operating in a fluid medium, according to some embodiments of the invention. Fig. 6 illustrates an embodiment of the pressure sensor with a two layered appendage **400C** allowing a higher sensitivity to pressure signals in the fluid medium. The form of the case **410D** and the interface **430D** of the appendage **400C** with the elongated transmission element **420D** are arranged to allow maximal support of the appendage **400C** and an optimal pressure signal transduction. The appendage **400C** may be shaped as two interconnected parallel plates.

The appendage **400C** is an embodiment of the appendage **400,** the case **410D** is an embodiment of the case **410.** The elongated transmission element **420D** is an embodiment of the elongated transmission element **420.** The interface **430D** arises from an embodiment of the connecting means **430.**

Fig. 7 is a cross section of a pressure sensor operating in a fluid medium, according to some embodiments of the invention. Fig. 7 illustrates an embodiment similar to the embodiment illustrated in Fig. 4, but lacking the appendage **400.** In this embodiment the pressure signal in the fluid medium is transmitted to the elongated transmission element **420E** from the front edge of the case **410E** alone. The front edge of the case **410E** may be shaped to allow an optimal signal receipt and transmission, e.g. dome shaped. The pressure sensor comprises a sensing element **440** and an elongated transmission element **420E.** The sensing element **440** transduces a pressure signal to an electric signal and is enclosed within a sealed case **410E.** The elongated transmission element **420E** is operatively connected to the sensing element **440** and to the inner side of the sealed case **410E,** such that the pressure signal is transmitted from the surface of the sealed case **410E** to the sensing element **440.** The pressure signals in the fluid medium cause movements in the surface of the sealed case **410E,** which are transmitted via the elongated transmission element **420E** to the sensing element **440.** In this embodiment, the appendage **400** is unified with the front end of the sealed case **410E.** The front end of the sealed case **410E** may be shaped to facilitate the reception of the pressure signal, e.g. have thin and somewhat flexible side walls **700** and thicker central wall **705** that may move and transmit the pressure signal to the elongated transmission element **420E.** The interface **430E** is arranged to transmit the movements of the front end of the sealed case **410E** to the elongated transmission element **420E.**

The case **410E** is an embodiment of the case **410.** The elongated transmission element **420E** is an embodiment of the elongated transmission element **420.** The interface **430E** arises from an embodiment of the connecting means **430.**

Fig. 8 is a cross section of a pressure sensor operating in a fluid medium, according to some embodiments of the invention. Fig. 8 illustrates an embodiment of the pressure sensor which differs in the form and connection method of the appendage and transmission element to the case. According to some embodiments of the invention, an appendage **400D** is connected upon the case **410F** and not cast as part of it. For example, the appendage **400D** may be connected by a connector **420F** (e.g. a screw **805)** going through the case **410F** and connecting to the sensing element **440.** The connector **420F** is thus a part of the elongated transmission element **420,** and transmit the pressure signal received by the appendage **400D** from the surrounding fluid medium to the sensing element **440.** The connector **420F** may be supported by a threaded hole **820** connected to the case **410F** and by supportive structures connected to the sensing element **440** at the connection region **450A.** The connection area **430F** of the appendage **400D** to the case **410F** is sealed to disable leakage of the external fluid medium into the case **410F** and is arranged to permit some movement of the connector **420F,** such that the connector **420F** can transmit the pressure signal from the appendage **400D** to the sensing element **440.** Sealing the connection area **430F** may be carried out by at least one O-ring **815** with an appropriate flexibility placed around the connector **420F.** The appendage **400D** is shaped to the form of a cap and may partly surround and be in close proximity to the front end of the case. E.g. parts of the cap shaped appendage **400D** may be parallel to the front end **810** of the case **410F** and further parallel to at least a part of the sides **811** of the case **410F.** The appendage **400** may be shaped to have a large area and a high sensitivity to pressure signals in the fluid medium. The form of the appendage **400** may be chosen relating to the direction from which pressure signals are expected.

The appendage **400D** is an embodiment of the appendage **400,** the case **410F** is an embodiment of the case **410.** The connector **420F** is at least a part of an embodiment of the elongated transmission element **420.** The interface **430F** arises from an embodiment of the connecting means **430.** The connection region **450A** arises from an embodiment of the connecting means **450.**

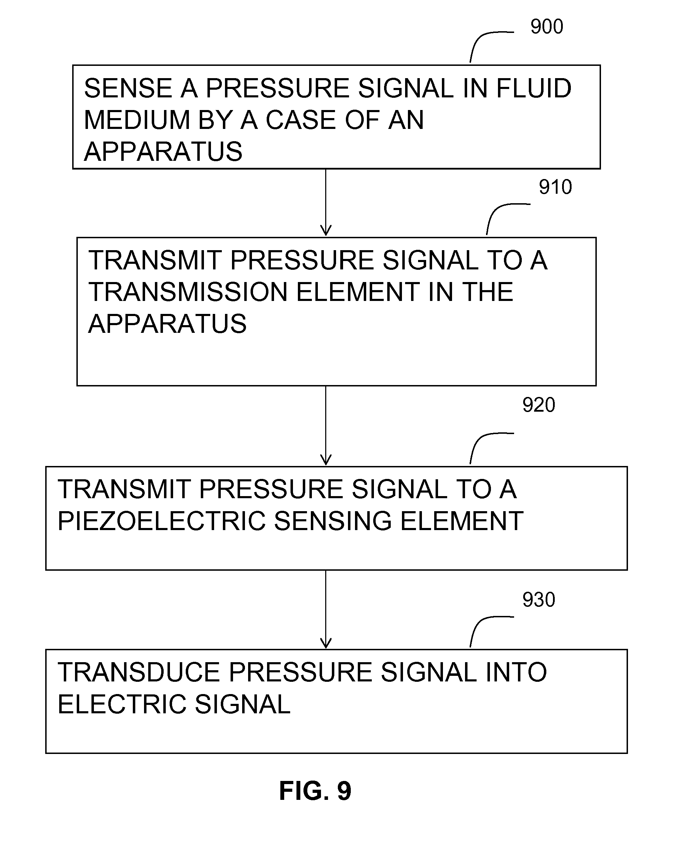

Fig. 9 is a flowchart illustrating a method for measuring pressure signals in a fluid medium, according to some embodiments of the invention. The method comprises the following stages:
- Sensing a pressure signal in a fluid medium by a sealed case of a measuring apparatus set in the fluid medium (stage **900**). The apparatus may receive the pressure signal on its envelope or at appendages shaped to have a high sensitivity to pressure signals in the fluid medium.
- Transmitting the pressure signal from the fluid medium to a transmission element inside the measuring apparatus (stage **910**). The apparatus is sealed to protect its inner components from the fluid medium. For example the apparatus may be sealed in a way that allows a long duration of operation or resistivity against chemically aggressive fluid mediums, e.g. with a low pH. The apparatus may be sealed in a way that prevents leakage in a moving fluid medium. The pressure signal is transmitted to the sensing element while maintaining the sealing of the apparatus.
- Transmitting the pressure signal from the transmission element to a piezoelectric sensing element (stage **920).** The transmission element may amplify the signal, or adjust the intensity of the signal to the sensitivity of the piezoelectric sensing element and to the required resolution of the measurements. The pressure signal is transmitted to the sensing element while maintaining the sealing of the apparatus.
- Transducing the pressure signal into an electric signal (stage **930**) by the piezoelectric sensing element. The electric signal is then processed and the pressure signal and its components may be analyzed.

According to some embodiments of the invention, the sensing (stage **900**) is performed by movements of parts of the case caused by the pressure signal. According to some embodiments of the invention, the sensing (stage **900**) is performed by at least one appendage connected to the sealed case.

According to some embodiments of the invention, prior to applying the method, the method parts of the case of the measuring apparatus may be arranged to be moved by pressure signals. According to some embodiments of the invention, prior to applying the method, at least one appendage may be connected to the sealed case. The appendages may improves the sensing of the pressure signal by increasing the surface area in contact with the fluid and controlling the flexibility of different parts of the case and appendages.

According to some embodiments of the invention, sensing the pressure signal (stage 900) and transmitting the pressure signal from the fluid medium to a transmission element and to the sensing element inside the measuring apparatus (stages **910, 920**) is carried out while maintaining the measuring apparatus sealed against the fluid medium and avoiding leakage.

According to some embodiments of the invention, the method may result in the amplification of the pressure signal and in adjusting the intensity of the signal as it reaches the sensing element in a way that optimizes the ability to analyze the resulting electric signal, in respect to the required signals.

In the above description, an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is understood that the phraseology and terminology employed herein is not to be construed as limiting and are for descriptive purpose only.

The principles and uses of the teachings of the present invention may be better understood with reference to the accompanying description, figures and

### examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples, methods and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention can be implemented in the testing or practice with methods and materials equivalent or similar to those described herein.

While the invention has been described with respect to a limited number of embodiments, these should not be construed as limitations on the scope of the invention, but rather as exemplifications of some of the preferred embodiments. Those skilled in the art will envision other possible variations, modifications, and applications that are also within the scope of the invention. Accordingly, the scope of the invention should not be limited by what has thus far been described, but by the appended claims and their legal equivalents.

## Claims

1. A pressure sensor operating in a fluid medium, said sensor comprising:
a sensing element for transducing a pressure signal to an electric signal, said sensing element enclosed within a case;
a mechanical amplifier operatively connected to said sensing element and structured to seal said case and isolate said sensing element from said fluid medium, said mechanical amplifier comprising:
an appendage connected externally to said case and immersed in said fluid medium,
an elongated transmission element operatively connecting said appendage to said sensing element, such that said pressure signal is transmitted from said appendage to said sensing element;
wherein pressure signals in said fluid medium cause movements in said appendage that are transmitted via said elongated transmission element to said sensing element that is isolated from said fluid medium.

2. The pressure sensor of claim 1, wherein said sensing element comprises:
an upper plate connected to said elongated transmission element,
a piezoelectric plate connected to said upper plate,
wherein said upper plate with said elongated transmission element are arranged to amplify the pressure signal to allow an optimal deformation of said piezoelectric plate.

3. The pressure sensor of claim 2, wherein said sensing element further comprising:
a lower metal plate connected to said piezoelectric plate such that at least a portion of said piezoelectric plate is enclosed between the upper plate and the lower metal plate,
at least one upper connection to said upper plate and at least one lower connection to said lower metal plate,
wherein the conductivity of said piezoelectric plate is measured between said upper and lower connections.

4. The pressure sensor of claim 1, wherein said elongated transmission element comprises a pin.

5. The pressure sensor of claim 1, wherein said elongated transmission element comprises a plurality of transmission elements interconnected by joints, wherein said plurality of transmission elements transmit said pressure signal to said sensing element in a range of intensities allowing an optimal analysis of said electric signal.

6. The pressure sensor of claim 1, wherein said appendage is shaped as a plate.

7. The pressure sensor of claim 1, wherein said appendage is shaped to the form of a cap.

8. The pressure sensor of claim 7, wherein said appendage partly surrounding and in close proximity to the front end of said case.

9. The pressure sensor of claim 1, wherein said appendage is shaped as two interconnected parallel plates.

10. The pressure sensor of claim 1, wherein said appendage is an integral part of said case, resulting in sealing said case.

11. The pressure sensor of claim 10, wherein said appendage comprises an inner notch and the distal end of said elongated transmission element is arranged to fit in said notch, such that movements of said appendage are transmitted to said elongated transmission element.

12. The pressure sensor of claim 1, wherein said appendage is connected upon said case by a connector, where said connector is a part of said elongated transmission element, and wherein sealing said case is carried out by at least one O-ring around said connector.

13. A pressure sensor operating in a fluid medium, said sensor comprising:
a sensing element for transducing a pressure signal to an electric signal, said sensing element enclosed within a sealed case;
an elongated transmission element operatively connected to said sensing element and to the inner side of said sealed case, such that said pressure signal is transmitted from the surface of said sealed case to said sensing element;
wherein pressure signals in said fluid medium cause movements in said surface of said sealed case that are transmitted via said elongated transmission element to said sensing element.

14. The pressure sensor of claim 13, wherein the front edge of said sealed case is arranged to transmit the pressure signal to said elongated transmission element.

15. The pressure sensor of claim 14, wherein the front edge of said sealed case is dome shaped.

16. The pressure sensor of claim 14, wherein the front edge of said sealed case has a thin and flexible side walls and a thicker central wall.

17. A method of measuring pressure signals in a fluid medium, said method comprising:
sensing a pressure signal in a fluid medium by a sealed case of a measuring apparatus,
transmitting said pressure signal from said fluid medium to a transmission element inside said measuring apparatus,
transmitting said pressure signal from said transmission element to a piezoelectric sensing element,
transducing said pressure signal into an electric signal by said piezoelectric sensing element.

18. The method of claim 17, further said sensing is performed by movements of parts of said case caused by said pressure signal.

19. The method of claim 17, wherein said sensing is performed by at least one appendage connected to said sealed case.

20. The method of claim 17, wherein said sensing a pressure signal and said transmitting said pressure signal are carried out while maintaining said measuring apparatus sealed against said fluid medium.

21. The method of claim 17, resulting in the amplification of said pressure signal.
